# EUROPÄISCHE PATENTSCHRIFT

(11) **EP 1 136 319 B1**
(45) Veröffentlichungstag und Bekanntmachung des Hinweises auf die Patenterteilung: **26.05.2004**
(21) Anmeldenummer: 00127130.3
(22) Anmeldetag: 12.12.2000
(51) Int. Cl.: B60R 5/00

(54) **Deckensystem für Grossraumfahrzeuge**
Ceiling system for large volume vehicles
Système de plafond pour véhicules à grand volume

(30) Priorität: 21.03.2000 DE 10013957
(43) Veröffentlichungstag der Anmeldung: 26.09.2001
(73) Patentinhaber: HAPPICH Fahrzeug- und Industrieteile GmbH, 42285 Wuppertal (DE)
(72) Erfinder: Jäckel, Helmut, 42553 Velbert (DE); Diehl, Christian, 42551 Velbert (DE)

(56) Entgegenhaltungen:
- EP-A- 0 529 263
- DE-C- 4 446 772
- DE-U- 7 728 530
- US-A- 5 244 269

## Beschreibung

Die Erfindung bezieht sich auf ein Deckensystem für Großraumfahrzeuge, insbesondere Reisebusse, mit im Übergangsbereich vom Fahrzeugdach zu den Fahrzeugseitenwänden angeordneten, vom Mittelgang des Fahrzeugs her zugängliche Gepäckablagefächer und Klappen zum Verschließen der Gepäckablagefächer.

Üblicherweise sind die zum Verschließen der in Großraumfahrzeugen vorgesehenen Gepäckablagefächer dienenden Klappen etwa rechtwinklig zu den Böden der Gepäckablagefächer ausgerichtet. Insoweit wird beispielsweise auf die deutsche Gebrauchsmusterschrift Nr. 77 28 530 Bezug genommen. Die Klappen weisen eine etwa senkrecht orientierte Ausrichtung in ihrer Schließlage auf und grenzen dabei mit ihren oberen Längskanten, in deren Bereich Achszapfen angeordnet sind, an das Fahrzeugdach und mit ihren unteren Längskanten an die Böden der Gepäckablagefächer an. Aufgrund dieser Anordnung bewegen sich die Klappen beim Auf- und Abklappen relativ weit in den Mittelgang des Fahrzeugs hinein, was wegen des in der Regel recht engen Platz- und Höhenangebots in Großraumfahrzeugen der in Rede stehenden Art von großem Nachteil ist, denn eine Bedienperson muß beim Öffnen oder Schließen der Klappen entweder den Kopf einziehen oder in die jeweils gegenüberliegende Sitzreihe treten und dort sitzende Passagiere belästigen.

Es ist daher Aufgabe der vorliegenden Erfindung, ein Deckensystem der eingangs genannten Art zu schaffen, das eine einfache Klappenbedienung auch bei äußerst engen Platzverhältnissen ermöglicht und sich darüber hinaus durch Materialersparnis und durch ein durchaus gefälliges Aussehen auszeichnen soll.

Zur Lösung dieser Aufgabe ist erfindungsgemäß vorgesehen, daß die Böden der Gepäckablagefächer ebenso wie die Klappen integrierte Bestandteile des am Fahrzeugdach bzw. dessen Gerippe zu befestigenden Deckensystems sind, daß sich die Klappen in ihrer Schließlage mit jeweils einer ihrer Längskanten, etwa auf einer Ebene mit den Böden liegend, an diese anschließen, und daß die Klappen zum Öffnen jeweils nach oben um Klappachsen klappbar sind, die im Bereich ihrer den Gepäckablagen abgewandten bzw. der Fahrzeuglängsmitte benachbarten Längskanten angeordnet sind.

Durch diese erfindungsgemäßen Maßnahmen werden beachtliche Vorteile erzielt. Zunächst ist es wesentlich, daß die Klappen ausgehend von ihrer Fahrzeugdachseitigen Anlenkung schräg oder bogenförmig verlaufend zu den Böden der Gepäckablagefächer hin ausgerichtet sind. Aufgrund dieser Anordnung benötigen die Klappen nicht mehr die den Mittelgang beengende Klappbewegung. Vielmehr können die Klappen nunmehr unter Freigabe der Gepäckablagefächer bis in Anlage an das Fahrzeugdach hochgeklappt werden, ohne dabei den Fahrgastraum in irgendeiner Weise einzuengen. Ein weiterer Vorteil der Erfindung besteht darin, daß die Klappen Teil der Deckenverkleidung sind und daher hinter den Klappen kein Verkleidungsmaterial mehr anzubringen ist. Die hierdurch gegenüber den bekannten Vorbildern erreichte Materialersparnis ist beachtlich. Schließlich erbringen die erfindungsgemäßen Maßnahmen auch einen beachtlichen Vorteil in ästhetischer Hinsicht.

Es ist vorgesehen, daß die klappachsenseitigen Längskanten der Klappen dem Fahrzeugdach jeweils wesentlich enger benachbart sind als die jeweils den Gepäckablagefächern zugewandten Längskanten. Wichtig ist also, daß die Klappen nicht nur höhenbeabstandet, sondern auch seitenbeabstandet zu den Böden der Gepäckablagefächer klappbeweglich gelagert sind.

Eine Ausgestaltung der Erfindung kann darin bestehen, daß Mittel, wie Schnappverschlüsse, Gasfedern, Riegel oder dgl. zur Halterung der Klappen in ihrer Schließlage wie auch in ihrer geöffneten Lage vorgesehen sind.

Gemäß einer besonders bevorzugten Weiterbildung der Erfindung, tragen die Klappen jeweils am Fahrzeugdach abgestützte, die Gepäckablagefächer in der Klappenschließlage abschottende Verschlußelemente, welche eine eine Klappenöffnung nicht behindernde, z. B. faltenbalgartige Ausbildung oder eine solche mit Sollknickstellen aufweisen und dazu dienen, bei geschlossenen Klappen wirksame Luftkanäle für die Fahrzeug-Belüftung oder Entlüftung zwischen dem Fahrzeugdach, den Klappen und den Verschlußelementen zu bilden. Dabei können die Verschlußelemente jeweils einen Überbrückungsbereich für einen Spalt zwischen den Böden und den daran angrenzenden Längsrändern der Klappen aufweisen und im Überbrückungsbereich können Öffnungen, z. B. in Kiemenform zum Luft-Eintritt oder Austritt ausgebildet sein. Aufgrund dieser Maßnahmen kann ein bisher üblicher, durch einen doppelten Gepäckablageboden gebildeter Luftkanal entfallen.

Die die Gepäckablagefächer abschottenden Verschlußelemente dienen weiterhin zur Sicherung des Gepäcks und wirken einem Verrutschen desselben in den Schwenkbereich der Klappen entgegen.

Von besonderem Vorteil ist eine weitere Ausgestaltung der Erfindung, gemäß der vorgesehen ist, daß sich im Bereich der Fahrzeuglängsmitte Leuchtmittel zwischen den Klappachsen der Klappen erstrecken und daß Leuchtenabdeckungen längs unterhalb des Fahrzeugdachs vorgesehen sind, die auch die klappachsenseitigen Längsränder der Klappen wie auch deren Klappachsen abdecken. Diese Maßnahme trägt wesentlich zu einem angenehmen Erscheinungsbild des Deckensystems bei.

Weiterhin kann vorgesehen sein, daß die Böden und die Klappen im geschlossenen Zustand der Gepäckablagefächer (über den Busquerschnitt gesehen) nach Art einer Sinuskurve verlaufend nebeneinander angeordnet sind. Hierdurch erhält das Fahrzeug eine designfreundliche Klappenanordnung unter Erhaltung einer fließenden Deckenlinie.

Ein Ausführungsbeispiel der Erfindung wird nachfolgend anhand der Zeichnungen näher erläutert, und es zeigen:
- Fig. 1: einen Vertikalschnitt durch den Innenraumbereich eines Großraumfahrzeugs und
- Fig. 2: einen Detailbereich von Fig. 1 im vergrößerten Maßstab.

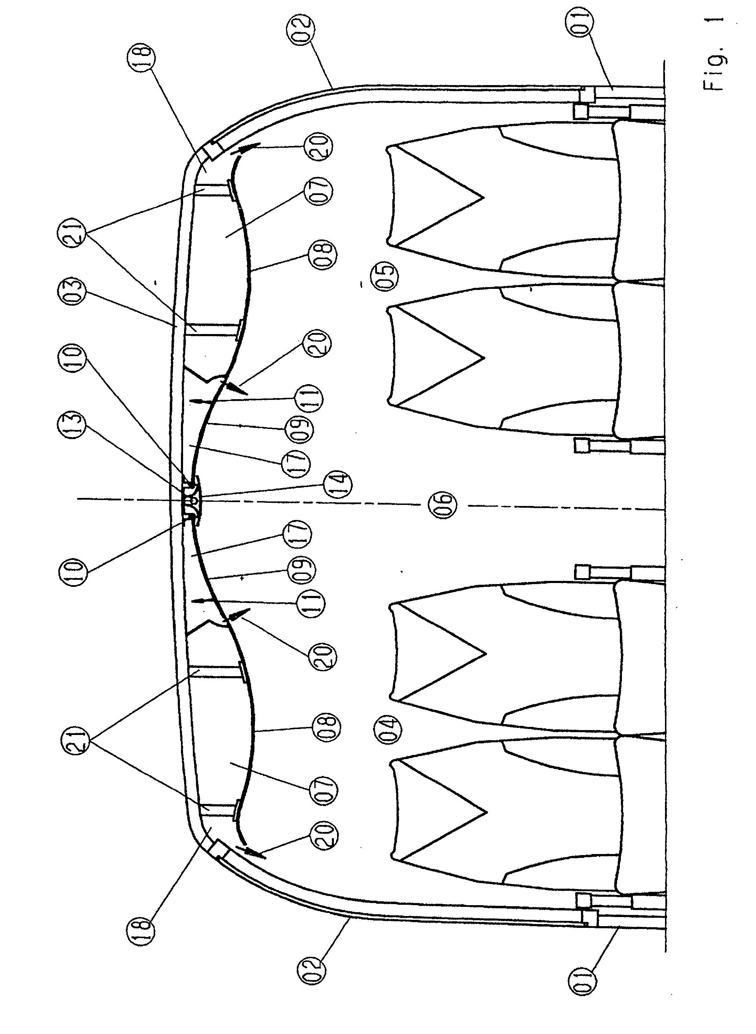

Fig. 1 zeigt den Passagierraumbereich eines Großraumfahrzeugs, bei dem es sich z. B. um einen Reisebus handeln kann. Erkennbar sind die Seitenwände 1 mit Fenstern 2, das Fahrzeugdach 3 mit dem daran angehängten, noch zu beschreibenden Deckensystem, eine linke Sitzreihe 4, eine rechte Sitzreihe 5 und ein Mittelgang 6.

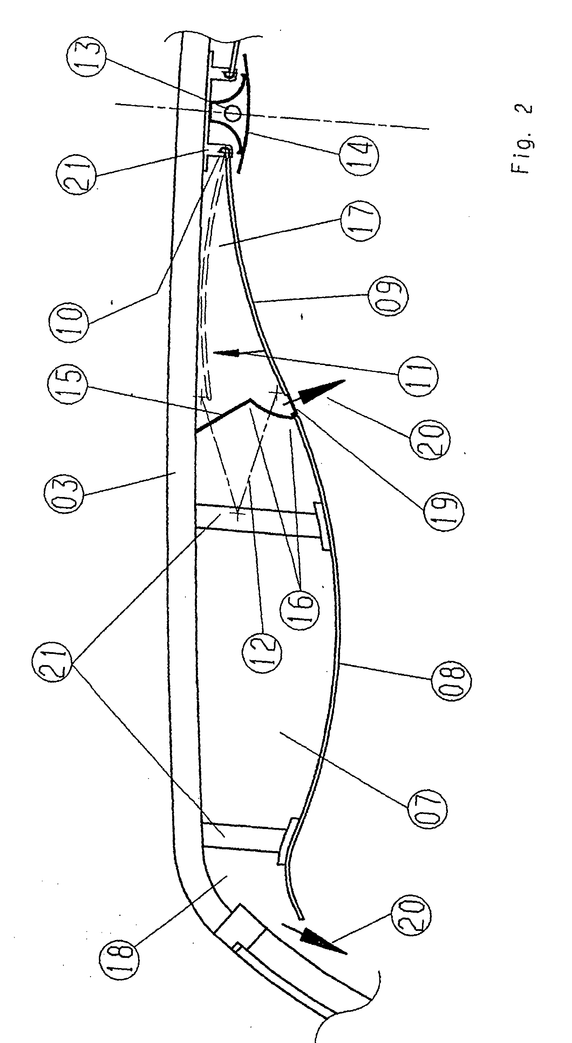

Das neue Deckensystem umfaßt Funktions- und Verkleidungselemente gleichermaßen. Oberhalb jeder Sitzreihe 4 und 5 befinden sich jeweils Gepäckablagefächer 7, deren unterer Abschluß durch jeweils einen Boden 8 gebildet ist. Jeder Boden 8, der längsdurchlaufend oder aus aneinandergesetzten Teillängen bestehen kann, bildet auf der dem Fahrgastraum zugewandten Seite ein Verkleidungselement. An die der Fahrzeuglängsmittenachse zugewandten Längsränder der Böden 8 schließen sich jeweils Klappen 9 an, und zwar jeweils mit einer ihrer Längskanten, während an die jeweils anderen Längskanten Klappachsen 10 angeschlossen sind. Die Klappen 9 lassen sich jeweils um die Klappachsen 10 in Richtung der Pfeile 11 zum Fahrzeugdach 3 hin klappen, um auf diese Weise die Gepäckablagefächer 7 zugänglich zu machen. Die Klappbewegung kann unterstützt werden durch in Fig. 2 gestrichelt angedeutete Gasfedern 12, die die Klappen 9 auch in ihren jeweiligen Endlagen sichern. Die dem Fahrgastraum zugewandte Sichtseite der Klappen 9 bildet jeweils ein Verkleidungselement, indem diese ebenso wie die Sichtseite der Böden 8 eine Folien-, Textil- oder dgl. Kaschierung aufweisen. Die Böden 8 und die Klappen 9 beider Gepäckablagefachreihen bilden in ihrer aus Fig. 1 ersichtlichen Lage gemeinsam eine Art Sinuskurve, wobei sich die Trennung zwischen den Böden 8 und den Klappen 9 jeweils im Bereich eines Wellentals und die Klappachsen 10 sich jeweils im Bereich eines Wellenbergs befinden.

Im Bereich der Fahrzeuglängsmitte erstrecken sich zwischen den Klappachsen 10 Leuchtmittel 13, welche durch eine durchlaufende Leuchtmittelabdeckung 14 abgedeckt sind. Die Leuchtmittelabdeckung 14 dient auch, wie aus den Zeichnungen ersichtlich, zur Abdeckung der Klappachsen 10 nebst der sich hier befindlichen Längsränder der Klappen 9.

Eine Besonderheit des neuen Deckensystems besteht noch darin, daß die Klappen 9 jeweils am Fahrzeugdach 3 abgestützte Verschlußelemente 15 tragen, die aus steifen Folien bestehen können. Die Verschlußelemente 15 sollen eine eine Klappenöffnung nicht behindernde Ausbildung aufweisen und sind daher faltenbalgartig oder, wie dargestellt, mit Sollknickstellen 16 ausgebildet. Durch die Verschlußelemente ergibt sich eine Abschottung der Gepäckfächer 7, eine Sicherung des Gepäcks gegen ein Verrutschen und insbesondere auch die Möglichkeit, den Raum zwischen den Klappen 9, dem Fahrzeugdach 3 und den Verschlußelementen 15 jeweils als Luftkanal 17 nutzen zu können, der dann zusammen mit seitlichen Luftkanälen 18 für eine wirksame Fahrzeugbelüftung und/oder Entlüftung sorgt. Hierfür ist weiterhin vorgesehen, daß die Verschlußelemente jeweils einen Überbrückungsbereich 19 für einen Spalt zwischen den Böden 8 und den daran angrenzenden Längsrändern der Klappen 9 aufweisen mit nicht näher dargestellten Öffnungen, z. B. in Kiemenform, zum Luft-Eintritt oder Austritt. Die sich durch die Luftkanäle 17 und 18 ergebende Möglichkeit der Fahrzeugbelüftung ist mit den Pfeilen 20 beispielhaft angegeben.

Das neue Deckensystem kann mittels angedeuteter Stützen 21 am Fahrzeugdach 3 befestigt werden. Es zeichnet sich durch eine platzsparende, in sich geschlossene Gepäckablage und eine Deckenverkleidung mit integrierter Luftführung und Ausströmöffnungen aus. Erzielt wurde insbesondere auch eine designfreundliche Klappenanordnung, eine fließende Deckenlinie und eine Luftführung zur Gangmitte ohne doppelten Gepäckablageboden mit platzsparender Luftkanalanordnung.

## Patentansprüche

1. Deckensystem für Großraumfahrzeuge, insbesondere Reisebusse, mit im Übergangsbereich vom Fahrzeugdach (3) zu den Fahrzeugseitenwänden (1) angeordneten, vom Mittelgang (6) des Fahrzeugs her zugängliche Gepäckablagefächer (7) und Klappen (9) zum Verschließen der Gepäckablagefächer (7), **dadurch gekennzeichnet, daß** die Böden (8) der Gepäckablagefächer (7) ebenso wie die Klappen (9) integrierte Bestandteile des am Fahrzeugdach (3) zu befestigenden Deckensystems sind, daß sich die Klappen (9) in ihrer Schließlage mit jeweils einer ihrer Längskanten, etwa auf einer Ebene mit den Böden (8) liegend an diese anschließen, und daß die Klappen (9) zum Öffnen jeweils nach oben um Klappachsen (10) klappbar sind, die im Bereich ihrer den Gepäckablagen (7) abgewandten bzw. der Fahrzeuglängsmitte benachbarten Längskanten angeordnet sind.

2. Deckensystem nach Anspruch 1, **dadurch gekennzeichnet, daß** die klappachsenseitigen Längskanten der Klappen (9) dem Fahrzeugdach (3) jeweils wesentlich enger benachbart sind als die jeweils den Gepäckablagefächern (7) zugewandten Längskanten.

3. Deckensystem nach Anspruch 1 oder 2, **dadurch gekennzeichnet, daß** Mittel, wie Schnappverschlüsse, Gasfedern (12), Riegel oder dgl. zur Halterung der Klappen (9) in ihrer Schließlage wie auch in ihrer geöffneten Lage vorgesehen sind.

4. Deckensystem nach wenigstens einem der vorangehenden Ansprüche, **dadurch gekennzeichnet, daß** die Klappen (9) jeweils am Fahrzeugdach (3) abgestützte, die Gepäckablagefächer (7) in der Klappenschließlage abschottende Verschlußelemente (15) tragen, welche eine eine Klappenöffnung nicht behindernde, z. B. faltenbalgartige Ausbildung oder eine solche mit Sollknickstellen (16) aufweisen und dazu dienen, bei geschlossenen Klappen (9) wirksame Luftkanäle (17) für die Fahrzeug-Belüftung oder Entlüftung zwischen dem Fahrzeugdach (3), den Klappen (9) und den Verschlußelementen (15) zu bilden.

5. Deckensystem nach Anspruch 4, **dadurch gekennzeichnet, daß** die Verschlußelemente (15) jeweils einen Überbrückungsbereich (19) für einen Spalt zwischen den Böden (8) und den daran angrenzenden Längsrändern der Klappen (9) aufweisen und daß im Überbrückungsbereich (19) Öffnungen, z. B. in Kiemenform zum Luft-Eintritt oder Austritt ausgebildet sind.

6. Deckensystem nach wenigstens einem der vorangehenden Ansprüche, **dadurch gekennzeichnet, daß** sich im Bereich der Fahrzeuglängsmitte Leuchtmittel (13) zwischen den Klappachsen (10) der Klappen (9) erstrecken und daß Leuchtenabdeckungen (14) längs unterhalb des Fahrzeugdachs (3) vorgesehen sind, die auch die klappachsenseitigen Längsränder der Klappen (9) wie auch deren Klappachsen (10) abdecken.

7. Deckensystem nach wenigstens einem der vorangehenden Ansprüche, **dadurch gekennzeichnet, daß** die Böden (8) und die Klappen (9) im geschlossenen Zustand der Gepäckablagefächer (7) nach Art einer Sinuskurve verlaufend nebeneinander angeordnet sind.

## Claims

1. Ceiling system for large volume vehicles, in particular coaches, having luggage storage compartments (7) which are arranged in the transition region from the vehicle roof (3) to the vehicle side walls (1) and are accessible from the central aisle (6) of the vehicle, and flaps (9) for closing the luggage storage compartments (7), **characterized in that** the bases (8) of the luggage storage compartments (7) are, like the flaps (9), integrated components of the ceiling system to be secured on the vehicle roof (3), **in that**, in their closed position, the flaps (9), by means of one of their longitudinal edges in each case, adjoin the bases (8), lying approximately on a level with them, and **in that** the flaps (9) for opening in each case upwards can be folded about folding axes (10) which are arranged in the region of their longitudinal edges which face away from the luggage stores (7) and are adjacent to the longitudinal centre of the vehicle.

2. Ceiling system according to Claim 1, **characterized in that** the longitudinal edges of the flaps (9) which are on the folding-axis side are in each case substantially more closely adjacent to the vehicle roof (3) than the longitudinal edges which in each case face the luggage storage compartments (7).

3. Ceiling system according to Claim 1 or 2, **characterized in that** means, such as snap fasteners, gas-filled springs (12), latches or the like are provided for securing the flaps (9) in their closed position and also in their open position.

4. Ceiling system according to at least one of the preceding claims, **characterized in that** the flaps (9) bear closure elements (15) which are in each case supported on the vehicle roof (3), partition off the luggage storage compartments (7) in the closed position of the flaps, have a design, for example in the manner of an expansion bellows, which does not obstruct a flap opening or have a design with predetermined buckling points (16) and are used, when the flaps (9) are closed, to form effective air ducts (17) between the vehicle roof (3), the flaps (9) and the closure elements (15) for ventilating or venting the vehicle.

5. Ceiling system according to Claim 4, **characterized in that** the closure elements (15) each have a bridging region (19) for a gap between the bases (8) and the adjacent longitudinal edges of the flaps (9), and **in that** openings, for example in the form of gills, for the inlet or outlet of air are formed in the bridging region (19).

6. Ceiling system according to at least one of the preceding claims, **characterized in that** in the region of the longitudinal centre of the vehicle lighting means (13) extend between the folding axes (10) of the flaps (9), and **in that** light covers (14) are provided longitudinally below the vehicle roof (3) and also cover those longitudinal edges of the flaps (9) which are on the folding-axis side, and the folding axes (10) of the said flaps.

7. Ceiling system according to at least one of the preceding claims, **characterized in that**, in the closed state of the luggage storage compartments (7), the bases (8) and the flaps (9) are arranged running next to one another in the manner of a sinusoidal curve.

## Revendications

1. Système de plafond pour véhicules à grand volume, notamment cars, comportant des compartiments à bagages (7) disposés dans la zone de transition entre le toit du véhicule (3) et les parois latérales du véhicule (1) et accessibles depuis le passage central (6) du véhicule et des abattants (9) pour la fermeture des compartiments à bagages (7), **caractérisé en ce que** les fonds (8) des compartiments à bagages (7), de même que les abattants (9) font partie intégrante du système de plafond à fixer au toit du véhicule (3), que les abattants (9), dans leur position de fermeture, reposant approximativement sur un plan avec les fonds (8), se raccordent par leurs bords longitudinaux respectifs à ceux-ci et que les abattants (9) sont, pour l'ouverture, rabattables respectivement vers le haut autour d'axes de rabattement (10) qui sont disposés au niveau de leurs bords longitudinaux détournés des compartiments à bagages (7) ou voisins du centre longitudinal du véhicule.

2. Système de plafond selon la revendication 1, **caractérisé en ce que** les bords longitudinaux situés du côté de l'axe de rabattement des abattants (9) sont respectivement sensiblement plus rapprochés du toit du véhicule (3) que les bords longitudinaux tournés respectivement vers les compartiments à bagages (7).

3. Système de plafond selon la revendication 1 ou 2, **caractérisé en ce qu'**il est prévu des moyens, comme des fermetures à clips, des ressorts à gaz (12), des verrous ou similaires pour maintenir les abattants (9) dans leur position fermée comme dans leur position ouverte.

4. Système de plafond selon au moins l'une quelconque des revendications précédentes, **caractérisé en ce que** les abattants (9) comportent des éléments de fermeture (15) s'appuyant respectivement au toit du véhicule (3) et fermant les compartiments à bagages (7) dans la position de fermeture des abattants, lesquels éléments de fermeture présentent une conformation, par exemple de type soufflet ou à points de pliage théoriques (16), ne gênant pas une ouverture des abattants et servent à former, lorsque les abattants (9) sont fermés, des canaux à air efficaces (17) pour l'aération ou la ventilation du véhicule entre le toit du véhicule (3), les abattants (9) et les éléments de fermeture (15).

5. Système de plafond selon la revendication 4, **caractérisé en ce que** les éléments de fermeture (15) présentent respectivement une zone transitoire (19) pour une fente entre les fonds (8) et les bords longitudinaux contigus des abattants (9) et que des ouvertures, par exemple sous forme d'ouïes, sont pratiquées pour l'entrée ou la sortie d'air dans la zone transitoire (19).

6. Système de plafond selon au moins l'une quelconque des revendications précédentes, **caractérisé en ce qu'**au niveau du centre longitudinal du véhicule, des moyens d'éclairage (13) s'étendent entre les axes de rabattement (10) des abattants (9) et qu'il est prévu, en longueur sous le toit du véhicule (3), des chapeaux de lampes (14) qui recouvrent aussi bien les bords longitudinaux situés du côté de l'axe de rabattement des abattants (9) que leurs axes de rabattement (10).

7. Système de plafond selon au moins l'une quelconque des revendications précédentes, **caractérisé en ce que** les fonds (8) et les abattants (9) sont disposés, en position fermée des compartiments à bagages (7), orientés à la manière d'une courbe sinusoïdale les uns près des autres.
